# EUROPEAN PATENT SPECIFICATION

(11) **EP 4 088 606 B1**
(45) Date of publication and mention of the grant of the patent: **06.08.2025**
(21) Application number: 21738768.7
(22) Date of filing: 08.01.2021
(51) Int. Cl.: A41D 27/02, A41D 31/06, A41D 31/18, B32B 5/02, B32B 5/12, B32B 5/26, A41D 3/00

(54) **GARMENT**
KLEIDUNGSSTÜCK
VÊTEMENT

(30) Priority: 10.01.2020 JP 2020003111
(43) Date of publication of application: 16.11.2022
(73) Proprietor: Mizuno Corporation, Osaka-shi, Osaka 541-8538 (JP)
(72) Inventor: SHIRAISHI Atsushi, Osaka-shi, Osaka 559-8510 (JP); SAKURAI Hiroki, Osaka-shi, Osaka 559-8510 (JP); NAKAMITSU Junji, Osaka-shi, Osaka 559-8510 (JP)
(74) Representative: Dehns
(86) International application number: PCT/JP2021/000431
(87) International publication number: WO 2021/141102

(56) References cited:
- FR-A- 1 258 476
- FR-A1- 2 344 239
- JP-A- 2002 327 310
- JP-A- 2003 027 302
- JP-A- 2003 027 302
- JP-A- 2014 200 930
- JP-A- 2018 111 898
- JP-A- 2018 111 898
- JP-U- H 023 408
- JP-U- H01 177 205
- JP-U- S6 194 522
- JP-U- S6 215 582
- US-A- 5 707 709

## Description

### Technical Field

The present invention relates to a garment that includes a lining with specific gathers to reduce the movement of airflow inside the garment, and thus has a high heat retention effect.

### Background Art

Garments filled with batting and/or down have conventionally been known as clothes for cold weather. The batting and down have good heat insulation, but may reduce the stretchability of a garment, since the outer fabric and the lining should have a high density to prevent the batting and down from coming out of the garment. Moreover, the lining cannot fit well to the body because the shape of the garment is designed to secure the space in the garment. Thus, warm air in the garment is easily discharged to the outside by the bellows effect of the garment, and the heat retention of the garment is likely to be reduced. On the other hand, a garment with a cold protection lining is not puffed and has less heat insulation as viewed from the cross section of the garment, compared to the batting and down. Further, warm air is discharged due to the bellows effect, and the heat retention is low.

Patent Document 1 discloses a quilting fabric with batting inserted. This fabric generates unevenness when it absorbs water to prevent stickiness. Patent Document 2 discloses a garment in which one surface of the fabric has ridge-like unevenness formed by a knitted structure. Patent Document 3 discloses a gathered fabric having folds formed by stitching a base fabric with an elastic thread.

### Prior Art Documents

### Patent Documents

Patent Document 1: JP 2008-297657 A
Patent Document 2: JP S61(1986)-047803 A
Patent Document 3: JP 2019-166171 A

### Disclosure of Invention

### Problem to be Solved by the Invention

However, the fabric of Patent Document 1 is quilted, and thus has a small difference in height of the unevenness. Therefore, the heat retention cannot be improved, and the stretchability is reduced. In the garment of Patent Document 2, the unevenness is only present on the surface of the fabric for each mesh of the knitted structure, and is not like undulation over the entire fabric. Thus, the heat retention cannot be improved. The fabric of Patent Document 3 has gathers and is also stretchable. However, when the fabric is made into a single piece of clothing, the dimensional change is not stable, the grooves may become cold spots, and the heat retention is low.

FR2344239 discloses a garment according to the preamble of claim 1.

To solve the conventional problems, the present invention provides a garment that has a high heat retention effect by dividing the space between the garment and the human body into small areas to prevent warm air from escaping to the outside.

### Means for Solving Problem

A garment of the present invention includes an outer fabric and a lining. The lining is a stretch fabric. An elastic thread is partially inserted in the stretch fabric in a body width direction, and an elastic thread insertion potion contracts to make gathers. The stretch fabric is a one-way fabric that is stretchable in the body width direction.

### Effects of the Invention

The garment of the present invention incudes the lining that is a stretch fabric. An elastic thread is partially inserted in the stretch fabric in the body width direction, and the elastic thread insertion portion contracts to develop gathers. The stretch fabric is a one-way fabric that is stretchable in the body width direction. With this configuration, the garment of the present invention has a high heat retention effect by dividing the space between the garment and the human body into small areas to prevent warm air from escaping to the outside. The garment is also easy to move. Moreover, the garment is comfortable to wear because the lining does not sag and the gathers are not deformed.

### Brief Description of Drawings

[FIG. 1] FIG. 1 is a schematic front view of the inner side of a garment of an embodiment of the present invention.
[FIG. 2] FIG. 2 is a schematic back view of the inner side of the garment in FIG. 1.
[FIG. 3] FIG. 3 is a graph showing the air velocity of airflow in garments of Example of the present invention and Comparative Examples.
[FIG. 4A] FIG. 4A is a schematic front view of the outer side of a garment of another embodiment of the present invention.
[FIG. 4B] FIG. 4B is a schematic back view of the outer side of the garment in FIG. 4A.
[FIG. 5A] FIG. 5A is a schematic front view of the inner side of the garment in FIG. 4A.
[FIG. 5B] FIG. 5B is a schematic back view of the inner side of the garment in FIG. 4A.

### Description of the Invention

In accordance with the present invention, a garment is provided according to claim 1. Preferred embodiments of the invention are provided according to the dependent claims.

A garment of the present invention includes an outer fabric and a lining. The lining is a stretch fabric, in which an elastic thread is partially inserted in the body width direction. The stretch fabric is a one-way fabric that is stretchable in the body width direction. The lining is a woven fabric or a knitted fabric. The knitted fabric may be either warp knit or circular knit. Each of the gathers in the lining is a fold (ridge) with a width of 10 to 100mm. A distance between the top and the bottom of the fold (ridge) is 10 to 50mm when the lining is laid on a horizontal surface. Moreover, the gathers are oriented in the body length direction. In other words, the gathers of the lining are formed along the body width direction. The outer fabric is preferably a woven fabric used for ordinary jackets or winter clothes. In the present invention, the term "gather" is synonymous with a fold or ridge.

The elongation rate of the lining (one-way fabric) is measured in the following manner: preparing a test sample with a width of 100 mm and a length of 150 mm, which are the dimensions of the project area when the fabric is placed on a horizontal surface (meaning that the test sample is taken while no load is applied to the fabric); and pulling the test sample under the conditions of a distance between grips of 76 mm and a load of 15 N. The elongation rate of the lining is (A) preferably 70 to 600%, more preferably 80 to 550%, and further preferably 90 to 550% in one of the warp direction and the weft direction and is (B) preferably 5 to 150%, more preferably 10 to 130%, and further preferably 10 to 110% in the other direction, where A > B, preferably A - B ≥ 30%, more preferably A - B ≥ 40%, and further preferably A - B ≥ 50% is established. When the elongation rate of the lining is within the above range, the garment having a high heat retention effect can be provided because the space between the garment and the human body is divided into small areas to prevent warm air from escaping to the outside. Moreover, the lining does not sag and the gathers are not deformed, so that the garment is able to retain heat well. The elongation rate of the stretch fabric in the body width direction is preferably 70% or more, and more preferably 70% to 600% when the width is 100 mm and the load is 15 N.

In the invention a plurality of elastic thread insertion portions are arranged in the stretch fabric in parallel with each other, and the elastic threads contract to form gathers. The number of the elastic threads is 2 to 25, more preferably 3 to 23, and further preferably 3 to 20 per 1 m. Thus, the lining includes the portions in which the elastic threads are inserted in parallel, and the portions in which no elastic thread is present and the gathers are formed. Each fold (ridge) of the gathers is preferably made in the direction perpendicular to the elastic threads (i.e., the body length direction). With this configuration, the entire fabric has an undulating shape with ridges and troughs. The folds (ridges) of the gathers are not continuously connected to each other in the direction perpendicular to the elastic threads. Thus, the garment has good heat retention, conforms to the movement of the human body, and is comfortable to wear.

A distance between the top and the bottom of each fold (ridge) of the gathers may be determined by placing the lining on a flat table and measuring the height from the table to the top of the fold (ridge). In this case, the distance is preferably 1 cm or more. The pitch of the folds (ridges) of the gathers is preferably 1 or more, more preferably 2 or more, and further preferably 3 or more and 30 or less per 30 cm. Due to the presence of the folds (ridges) of the gathers, the lining fits to the body and also has sufficient flexibility to fill the space between the garment and the body, thereby improving the heat retention of the garment. Moreover, when the lining extends according to the movement of the wearer, the gathers are held and the folds (ridges) of the gathers still fit to the body. Thus, the garment can retain the warm air around the body and maintain the heat retention. Since the folds (ridges) of the gathers are not continuously connected to each other in the direction perpendicular to the elastic threads, heat does not easily escape in the body length direction.

It is more preferable that the surface of the stretch fabric has a pile. The pile may be a loop pile, and the pile length is preferably 0.1 to 7 mm, and more preferably 0.2 to 5 mm. The pile surface of the stretch pile fabric comes into contact with the inner garment, which is to be worn underneath, and generates frictional resistance, so that the weight of the garment is dispersed. Thus, the garment feels light and comfortable to wear.

The mass of the stretch fabric of the lining is preferably 30 to 300 g/m², and more preferably 50 to 250 g/m². This can reduce the weight of the whole garment.

The outer fabric is preferably a woven fabric used for ordinary jackets or winter clothes, or a knitted fabric with low breathability. The outer fabric is a woven fabric composed of 30% by weight or more of at least one type of filament yarn selected from the group consisting of a polyester multifilament yarn, a nylon multifilament yarn, a polypropylene multifilament yarn, and a polyethylene multifilament yarn. The polyester, nylon, polypropylene, and polyethylene multifilament yarns are stronger than spun yarns. The outer fabric containing 30% by weight or more of at least one of these multifilament yarns is thin and light, and is also easy to dry if it gets wet. Moreover, the fabric made of filament yarns has a higher weaving density than that of the fabric made of spun yarns, and thus can reduce the air permeability. If at least one of the above multifilament yarns is less than 30% by weight, a thin and light outer fabric cannot be obtained because oflow strength.

The outer fabric may be water repellent. Any weave structure such as plain weave, twill weave, satin weave, or variable weave may be used. The mass per unit area of the outer fabric is preferably 40 to 300 g/m². This makes the outer fabric thin and light. The air permeability of the outer fabric is preferably 0 to 150 cc/cm²·see, and more preferably 0.5 to 100 cc/cm²·sec, as measured by a Frajour method in accordance with JIS L 1096: 2010. The outer fabric is less breathable than the lining. Therefore, warm air can be retained even in the grooves of the lining, and the heat retention of the garment can be improved. The air permeability of the outer fabric is preferably at least 50 cc/cm²·sec lower than that of the lining. Moreover, the outer fabric is less stretchable than the lining. Therefore, the garment will not be fully stretched after it has been worn and subjected to movements. The presence of the folds (ridges) of the gathers allows air to be trapped between the outer fabric and the lining, and thus can improve the heat retention of the garment. Further, the outer fabric helps to keep the shape of the garment when it is washed.

The air velocity in the garment may be measured by the following procedure. First, a subject wears a compression garment, and air velocity sensor modules are attached to the chest and sides of the subject. Then, the subject wears the garment of the present invention over the sensor modules, and the airflow inside the garment is measured when the subject raises and lowers the arms once per second. The air velocity sensor module is HWS-16-ONE manufactured by Hort-Plan LLC. The garment of the present invention is prepared to fit the size of the subject according to the JASPO standard. In this measurement method, the air velocity in the garment is preferably 0.05 to 0.6 m/sec, and more preferably 0.1 to 0.4 m/sec. Thus, it is possible to reduce the movement of the airflow inside the garment and improve the heat retention effect.

The lining and the outer fabric are preferably joined at the upper end of the garment by sewing. This can prevent the entire lining from sagging. For example, the lining and the outer fabric are preferably joined at at least one of the neckline and the shoulder lines by sewing. When the lining does not have the neckline or the shoulder lines, the uppermost part of the lining may be joined to the outer fabric by sewing. It is more preferable that the outer fabric and the lining are not sewn together at the side lines. Thus, the lining easily fits around the waist and abdomen in the garment.

With respect to the relationship between the lining and the outer fabric in the body width direction, the length of the lining is 3 times or less, more preferably 2.5 times or less, and further preferably 2 times or less the length of the outer fabric. This can prevent the gathers from hanging down. The length of the lining is 1.05 times or more, and more preferably 1.1 times or more the length of the outer fabric. This can keep the shape of the gathers without deformation. The gathers of the lining can be maintained by making the area of the lining larger than that of the outer fabric in a region of the garment having a certain area. Although the inner circumference is smaller than the outer circumference of the garment, the lining is stretchable and able to change the shape like an accordion. Thus, the garment allows for easy movement, and also ensures high heat retention because warm air does not come out from the garment. Fabrics and filling materials may be put between the lining and the outer fabric.

The lining is longer than the fabric that is brought into contact with the lining (including, e.g., outer fabric, interlining fabric, pocket fabric, and other secondary fabrics for clothing). These fabrics can be sewn in the same place by a method for sewing two fabrics with different lengths, such as shirring, tucking, or gathering. Thus, the lining and the fabric in contact with the lining can be made into a garment while maintaining the gathers of the lining. The lining may be placed anywhere in the garment. The arrangement of the lining in at least a part of the body of the garment can keep the trunk warm, where heat is largely dissipated. When the lining is placed in a location through which the outside air easily enters, such as the collar, hem, or cuffs, it is possible to reduce the outflow of warm air in the garment. Optimal garment design can be achieved by examining the locations of the lining such as the body, collar, hem, and cuffs depending on the purpose of the garment.

The garment of the present invention may be applicable to an upper garment and/or a lower garment. The garment is suitable for use in sports such as golf, mountain climbing, skiing, running, walking, cycling, mountain climbing, and tennis especially in the cold season. Moreover, the garment is easy to wash, dries quickly after exposure to sweating, has high functionality as sportswear, and does not interfere with the movement of the human body.

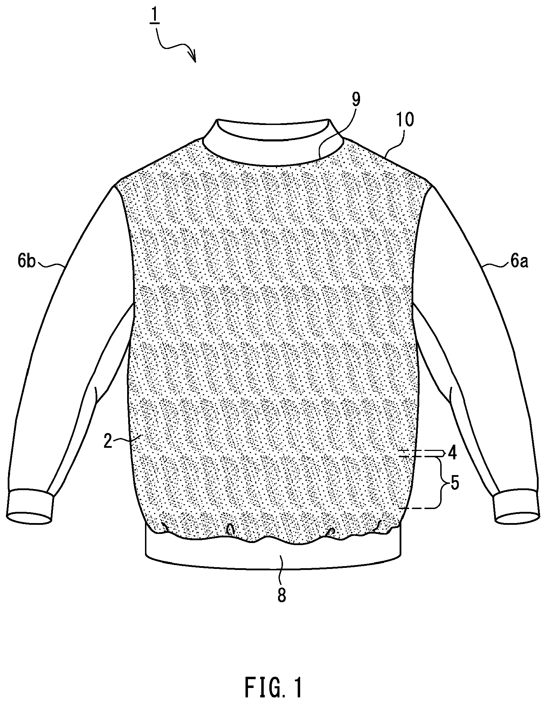

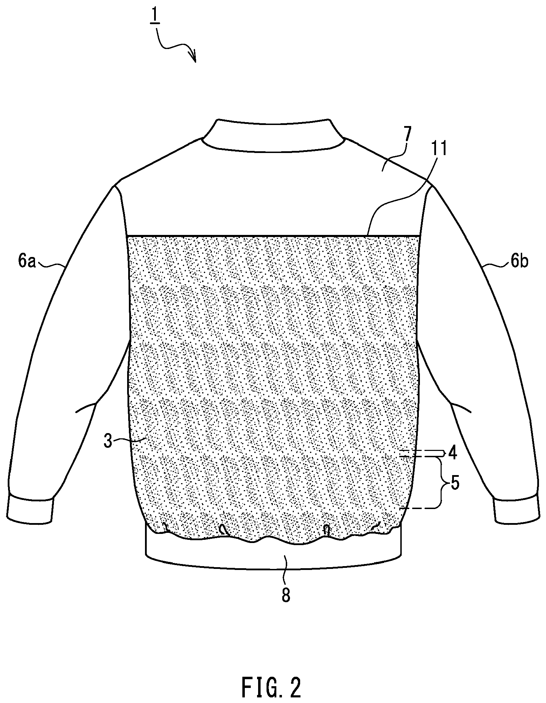

Hereinafter, the garment of the present invention will be described with reference to the drawings. FIG. 1 is a schematic front view of the inner side of a garment 1 of an embodiment of the present invention. FIG. 2 is a schematic back view of the inner side of the garment 1. A front body lining 2 and a back body lining 3 of the garment 1 are made of a stretch pile fabric. In the stretch pile fabric for each of the front body lining 2 and the back body lining 3, a plurality of elastic threads are partially inserted in the body width direction, and elastic thread insertion portions 4 contract to develop gathers 5. The stretch pile fabric is a one-way fabric that is stretchable in the body width direction. Each fold (ridge) of the gathers 5 is oriented in the direction perpendicular to the elastic threads (i.e., the body length direction). In this embodiment, linings 6a, 6b of the arms and a lining 7 above the shoulder blade of the back body may be any material or may be unlined.

In FIG. 1, the front body lining 2 and an outer fabric 8 are joined at a neckline 9 and shoulder lines 10 by sewing. The outer fabric and the lining are not sewn together at the side lines. In FIG. 2, the back body lining 3 and the outer fabric 8 are joined at a back yoke line 11 by sewing. This can prevent the entire lining from sagging. The lining is a stretch pile fabric and therefore can move freely to some extent following the inner garment due to the friction with the inner garment. Thus, the garment does not interfere with the movement of the human body during exercise.

FIGS. 1 and 2 show an example of a pullover upper garment. The garment may be a front opening upper garment. In such a case, zippers, hooks, or buttons may be used to open and close the front of the garment.

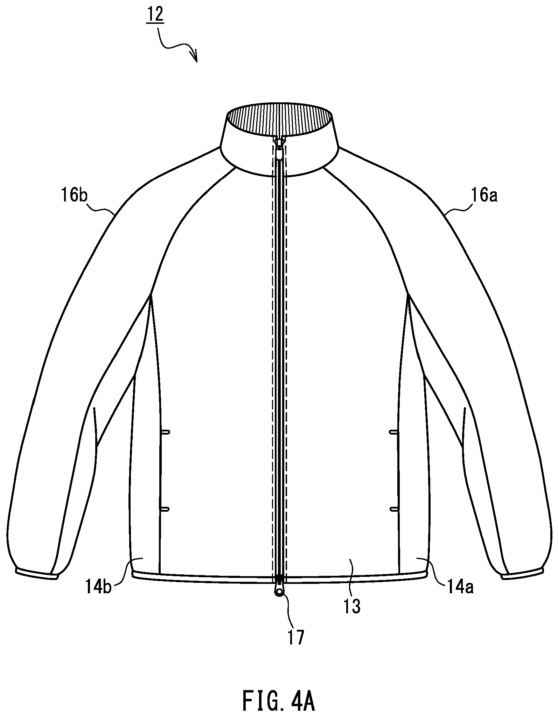

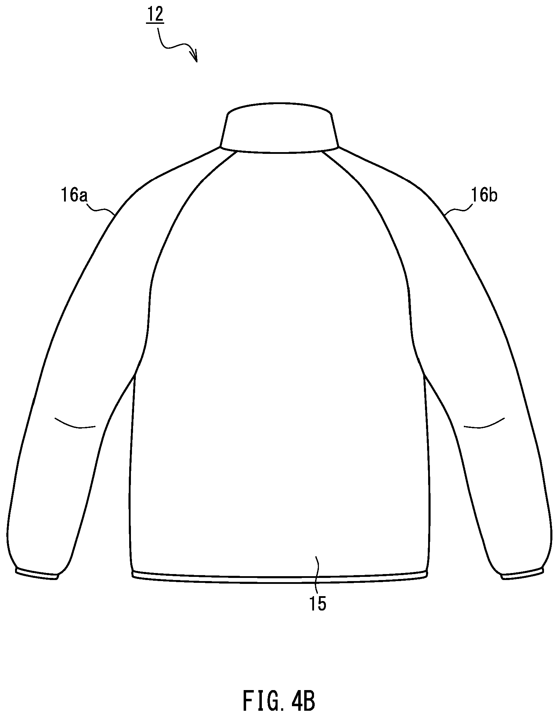

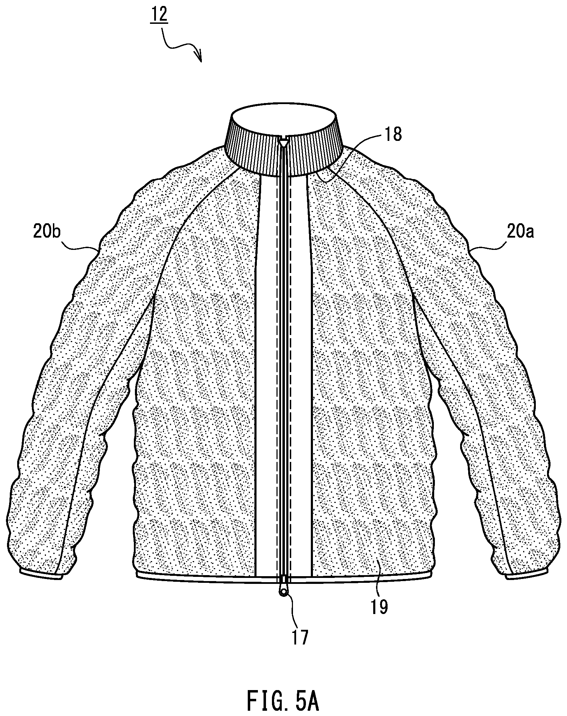

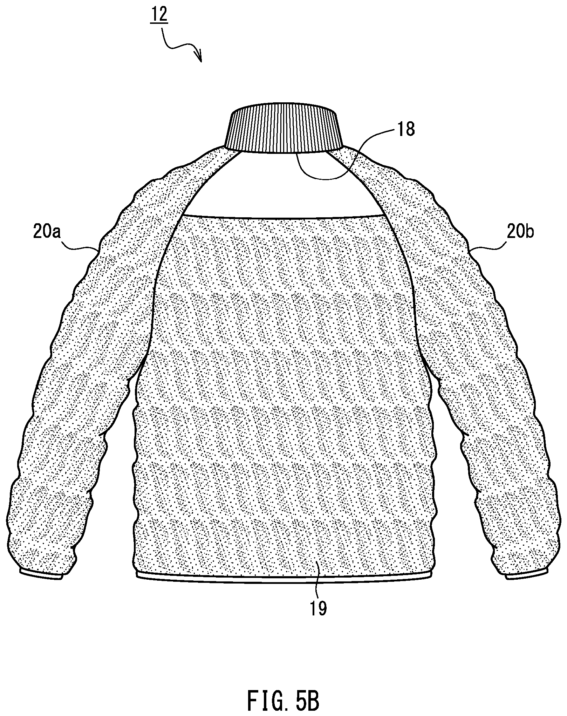

FIG. 4A is a schematic front view of the outer side of a garment of another embodiment of the present invention. FIG. 4B is a schematic back view of the outer side of the garment. FIG. 5A is a schematic front view of the inner side of the garment. FIG. 5B is a schematic back view of the inner side of the garment. This garment differs from the garment shown in FIGS. 1 and 2 in that the front of a blouson jacket can be opened and closed with a zipper. As shown in FIGS. 4A and 4B, a garment 12 includes a front body outer fabric 13, side outer fabrics 14a, 14b, a back body outer fabric 15, and sleeve outer fabrics 16a, 16b. The front of the garment 12 can be opened and closed with a zipper 17.

As shown in FIGS. 5A and 5B, a front body lining 19 and a back body lining 19 are made of a single stretch pile fabric. The front and back body linings 19 are joined to sleeve linings 20a, 20b by sewing. The upper back portion of the back body lining (represented by a blank portion in FIG. 5B) is a lining used for ordinary woven fabrics. The lining 19 is joined to the front body outer fabric 13 at a neckline 18 by sewing. Moreover, the lining 19 is joined to the back body outer fabric 15 at the neckline 18 via he above upper back portion by sewing. The outer fabric and the lining are not sewn together at the side lines.

### Examples

Hereinafter, the present invention will be described in more detail by way of examples. However, the present invention should not be interpreted solely by the following examples.

### <Air velocity of airflow inside garment>

First, a subject wore a compression garment, and air velocity sensor modules were attached to the chest and sides of the subject. Then, the subject wore the garment of the present invention over the sensor modules, and the airflow inside the garment was measured when the subject raised and lowered the arms once per second. The air velocity sensor module was HWS-16-ONE manufactured by Hort-Plan LLC.

### <Air permeability of fabric>

The air permeability was measured by a Frajour method in accordance with JIS L 1096: 2010.

### <Heat retention evaluation>

The heat retention was evaluated (ΔT = 20°C) by KES (Thermo Labo II, precision and rapid measuring device for physical properties). A square cushion shaped sample was used.

### (Example 1)

### <Lining>

### (1) Lining 2, 3 shown in FIGS. 1 to 2

A warp-knitted loop pile fabric was used. This fabric was made of polyethylene terephthalate with a total fineness of 84 decitex and 72 multifilaments. The loop pile length was 1 mm. A filament twisted yarn (FTY) was prepared by covering polyurethane elastic fibers of 150 decitex with 48 polyester filaments of 110 decitex. Five FTY yarns were arranged in the fabric in parallel with each other at 70 mm intervals, and then knitted in a state in which the yarns were stretched (drafted) by 15%. The stretched portions of the yarns were relaxed after knitting, so that gathers were made in the direction perpendicular to the direction of insertion of the polyurethane elastic fibers. The mass per unit area was 140 g/m². There were 5 folds (ridges) of the gathers per 30 cm, and the height to the top of each fold (ridge) was 2 cm.

### (2) Lining 6 a, 6 b shown in FIGS. 1 to 2

A raised tricot knitted fabric was used. The yarn used had a fineness of 84 decitex and 72 polyester filaments. The mass per unit area of the knitted fabric was 100 g/m². The elongation rate of the lining in the body width direction was 150% when the width was 100 mm and the load was 15 N. Similarly, the elongation rate of the lining in the body length direction was 30%.

### (3) Lining 7 shown in FIGS. 1 to 2

The lining 7 was the same material as the lining 6a, 6b.

### <Outer fabric>

A polyethylene terephthalate (PET) multifilament yarn (total fineness: 22 decitex, number of fibers: 48) was used as a warp yarn. A polyethylene terephthalate (PET) multifilament yarn (total fineness: 22 decitex, number of fibers: 48) was used as a weft yarn. Then, a plain weave fabric with a warp yarn density of 260 per inch and a weft yarn density of 120 per inch was prepared as an outer fabric. The mass per unit area was 150 g/m². The elongation rate of the outer fabric in the body width direction was 40% when the width was 100 mm and the load was 15 N. Similarly, the elongation rate of the outer fabric in the body length direction was 20%.

### <Upper garment>

The upper garment shown in FIGS. 1 to 2 was sewn. The linings 2, 3 shown in FIGS. 1 to 2 were arranged with their stretch direction along the body width direction. The elongation rate of the stretch fabric in the body width direction was 150% when the width was 100 mm and the load was 15 N. Similarly, the elongation rate of the stretch fabric in the body length direction was 30%. This upper garment weighed 510 g for men's L size. With respect to the relationship between the lining and the outer fabric in the body width direction, the length of the lining was 1.5 times as long as the length of the outer fabric.

### <Sample for heat retention test>

A square cushion shaped sample of 20 cm long and 20 cm wide was used. The sample had a two-layer structure of the outer fabric and the lining 2. Four sides of the sample are sewn together so as to maintain the gathers of the lining.

### (Comparative Example 1)

Upper garment: The outer fabric of Example 1 was used for both the outer fabric and the lining, and polyester resin batting (mass per unit area of 80 g/m²) was sandwiched between them, which were then sewn together, resulting in an upper garment with a three-layer structure. The silhouette of the external appearance of the upper garment was the same as that of Example 1.

Sample for heat retention test: The outer fabric of Example 1 was used for both the outer fabric and the lining, and polyester resin batting (mass per unit area of 80 g/m²) was sandwiched between them, which were then sewn together, resulting in a square cushion shaped sample with a three-layer structure.

### (Comparative Example 2)

Upper garment: The outer fabric of Example 1 was used for the outer fabric, and the lining 6a of Example 1 was used for all the linings, which were then sewn together, resulting in an upper garment with a two-layer structure. The silhouette of the external appearance of the upper garment was the same as that of Example 1.

Sample for heat retention test: The outer fabric of Example 1 was used for the outer fabric, and the lining 6a of Example 1 was used for all the linings, which were then sewn together, resulting in a square cushion shaped sample with a two-layer structure.

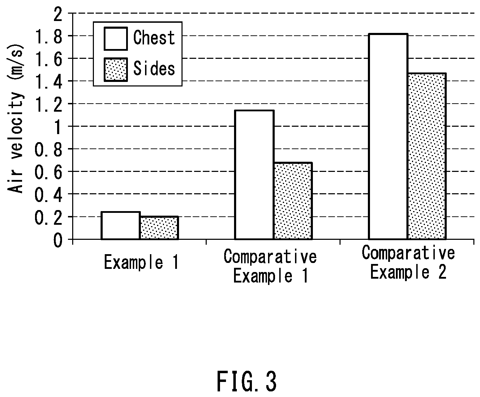

Table 1 shows the conditions and the results. FIG. 3 is a graph showing the air velocity of airflow in the garments of Example of the present invention and Comparative Examples.

**[TABLE 1]**

| | | Example 1 | Comparative Example 1 | Comparative Example 2 |
|---|---|---|---|---|
| Air velocity of airflow in garment (m/s) chest/sides | | 0.22/0.20 | 1.16/0.67 | 1.81/1.44 |
| Air permeability of fabric (cc/cm²·sec) | Outer fabric | 1 | 1 | 1 |
| | Lining | 289 | 1 | 132 |
| Heat retention evaluation (clo value) | | 2.06 | 2.03 | 1.77 |

As is evident from Table 1, the upper garment of Example 1 has a high heat retention effect and is easy to move. Moreover, the upper garment is comfortable to wear because the lining does not sag and the gathers are not deformed. Further, the upper garment breathes well and does not become sticky when it is worn. In addition, the upper garment dries quickly after washing. In the upper garments of Comparative Examples 1, 2, the air velocity of the airflow in the garments is high, and thus the function of trapping warm air is low.

### Industrial Applicability

The garment of the present invention is suitable for use in sports such as golf, mountain climbing, skiing, running, walking, cycling, mountain climbing, and tennis in the cold season. The garment of the present invention is also suitable for use in work clothes and general winter clothes.

### Description of Reference Numerals

- 1, 12: Garment
- 2,: Front body lining
- 3: Back body lining
- 4: Elastic thread insertion portion
- 5: Gathers (ridges)
- 6a, 6b: Lining of the arms
- 7: Lining above the shoulder blade of the back body
- 8: Outer fabric
- 9, 18: Neckline
- 10: Shoulder line
- 11: Back yoke line
- 13: Front body outer fabric
- 14a, 14b: Side outer fabric
- 15: Back body outer fabric
- 16a, 16b: Sleeve outer fabric
- 17: Zipper
- 19: Lining
- 20a, 20b: Sleeve lining

## Claims

1. A garment (1, 12) comprising an outer fabric (8, 13, 14a, 14b, 15, 16a, 16b) and a lining (2, 3, 19, 20a, 20b),
wherein the lining (2, 3, 19, 20a, 20b) is a stretch fabric,
an elastic thread is partially inserted in the stretch fabric in a body width direction, and an elastic thread insertion portion (4) contracts to make gathers (5),
the stretch fabric is a one-way fabric that is stretchable in the body width direction, and wherein a plurality of elastic threads are inserted in the stretch fabric in parallel with each other,
**characterized in that** each of the gathers (5) in the lining (2, 3, 19, 20a, 20b) is a ridge with a width of 10 to 100 mm, and a distance between a top and a bottom of the ridge is 10 to 50 mm when the lining is laid on a horizontal surface,
the number of the elastic threads inserted in parallel with each other is 2 to 25 per 1 m, and
the relationship between the lining (2, 3, 19, 20a, 20b) and the outer fabric in the body width direction is defined such that a length of the lining (2, 3, 19, 20a, 20b) is 1.05 to 3 times as long as a length of the outer fabric (8, 13, 14a, 14b, 15, 16a, 16b).

2. The garment (1, 12) according to claim 1, wherein the gathers (5) are oriented in a body length direction.

3. The garment (1, 12) according to claim 1 or claim 2, wherein a mass per unit area of the stretch fabric is 30 to 300 g/m².

4. The garment (1, 12) according to any one of claims 1 to 3, wherein an elongation rate of the stretch fabric is (A) 70 to 600% in one of a warp direction and a weft direction and (B) 5 to 150% in the other direction, where A > B is established.

5. The garment (1, 12) according to any one of claims 1 to 4, wherein the elongation rate of the stretch fabric in the body width direction is 70% or more when a width is 100 mm and a load is 15 N.

6. The garment (1, 12) according to any one of claims 1 to 5, wherein the stretch fabric is a pile fabric with loop pile, and a pile length is 0.1 to 7 mm.

7. The garment (1, 12) according to any one of claims 1 to 6, wherein the outer fabric (8, 13, 14a, 14b, 15, 16a, 16b) is a woven fabric composed of 30% by weight or more of at least one type of filament yarn selected from the group consisting of a polyester multifilament yarn, a nylon multifilament yarn, a polypropylene multifilament yarn, and a polyethylene multifilament yarn.

8. The garment (1, 12) according to any one of claims 1 to 7, wherein a mass per unit area of the outer fabric (8, 13, 14a, 14b, 15, 16a, 16b) is 40 to 300 g/m².

9. The garment (1, 12) according to any one of claims 1 to 8, wherein the outer fabric (8, 13, 14a, 14b, 15, 16a, 16b) has an air permeability of 0 to 150 cc/cm²·sec, as measured by a Frajour method in accordance with JIS L 1096, and the air permeability of the outer fabric (8, 13, 14a, 14b, 15, 16a, 16b) is at least 50 cc/cm²·sec lower than that of the lining (2, 3, 19, 20a, 20b).

10. The garment (1, 12) according to any one of claims 1 to 9, wherein the garment (1, 12) is at least one selected from the group consisting of an upper garment and a lower garment.

## Patentansprüche

1. Kleidungsstück (1, 12), das einen Außenstoff (8, 13, 14a, 14b, 15, 16a, 16b) und ein Futter (2, 3, 19, 20a, 20b) umfasst,
wobei das Futter (2, 3, 19, 20a, 20b) ein Stretch-Stoff ist,
ein elastischer Faden teilweise in den Stretch-Stoff in einer Körperbreitenrichtung eingelegt ist, und sich ein Einführungsabschnitt (4) des elastischen Fadens zusammenzieht, um Kräuselungen (5) zu bilden,
der Stretch-Stoff ein Einweg-Stoff ist, der in der Körperbreitenrichtung dehnbar ist, und wobei eine Vielzahl von elastischen Fäden in den Stretch-Stoff parallel zueinander eingelegt ist,
**dadurch gekennzeichnet, dass** jede der Kräuselungen (5) im Futter (2, 3, 19, 20a, 20b) einen Grat mit einer Breite von 10 bis 100 mm ist, und ein Abstand zwischen einem Oberteil und Unterteilt des Grats 10 bis 50 mm beträgt, wenn das Futter auf eine horizontale Oberfläche gelegt ist,
die Anzahl der parallel zueinander eingelegten elastischen Fäden 2 bis 25 pro 1 m beträgt und
das Verhältnis zwischen dem Futter (2, 3, 19, 20a, 20b) und dem Außenstoff in der Körperbreitenrichtung so definiert ist, dass eine Länge des Futters (2, 3, 19, 20a, 20b) 1,05 bis 3-mal so lang ist wie eine Länge des Außenstoffs (8, 13, 14a, 14b, 15, 16a, 16b).

2. Kleidungsstück (1, 12)
nach Anspruch 1, wobei die Kräuselungen (5) in einer Körperlängenrichtung ausgerichtet sind.

3. Kleidungsstück (1, 12)
nach Anspruch 1 oder Anspruch 2, wobei eine Masse pro Einheitsfläche des Stretch-Stoffs 30 bis 300 g/m² beträgt.

4. Kleidungsstück (1, 12)
nach einem der Ansprüche 1 bis 3, wobei eine Dehnungsrate des Stretch-Stoffs (A) 70 bis 600 % in einer Kettfadenrichtung und einer Schussrichtung und (B) 5 bis 150 % in der anderen Richtung beträgt, wobei A > B festgelegt ist.

5. Kleidungsstück (1, 12)
nach einem der Ansprüche 1 bis 4, wobei die Dehnungsrate des Stretch-Stoffs in der Körperbreitenrichtung 70 % oder mehr beträgt, wenn eine Breite 100 mm und eine Last 15 N ist.

6. Kleidungsstück (1, 12)
nach einem der Ansprüche 1 bis 5, wobei der Stretch-Stoff ein Polgewebe mit Schlingenware ist und eine Schlingenlänge 0,1 bis 7 mm beträgt.

7. Kleidungsstück (1, 12)
nach einem der Ansprüche 1 bis 6, wobei der Außenstoff (8, 13, 14a, 14b, 15, 16a, 16b) ein Webstoff ist, der zu 30 Gewichts-% oder mehr aus mindestens einem Typ von Endlosgarn besteht, ausgewählt aus der Gruppe bestehend aus Polyester-Multifilamentgarn, einem Nylon-Multifilamentgarn, einem Polypropylen-Multifilamentgarn und einem Polyethylen-Multifilamentgarn.

8. Kleidungsstück (1, 12)
nach einem der Ansprüche 1 bis 7, wobei eine Masse pro Einheitsfläche des Außenstoffs (8, 13, 14a, 14b, 15, 16a, 16b) 40 bis 300 g/m² beträgt.

9. Kleidungsstück (1, 12)
nach einem der Ansprüche 1 bis 8, wobei der Außenstoff (8, 13, 14a, 14b, 15, 16a, 16b) eine Luftdurchlässigkeit von 0 bis 150 cc/cm^{2·}Sek aufweist, gemessen anhand einer Frajour-Methode nach JIS L 1096, und die Luftdurchlässigkeit des Außenstoffs (8, 13, 14a, 14b, 15, 16a, 16b) mindestens 50 cc/cm^{2·}Sek niedriger ist als die des Futters (2, 3, 19, 20a, 20b).

10. Kleidungsstück (1, 12)
nach einem der Ansprüche 1 bis 9, wobei das Kleidungsstück (1- 12) mindestens eines ist, ausgewählt aus der Gruppe bestehend aus einem Oberkleidungsstück und einem Unterkleidungsstück.

## Revendications

1. Vêtement (1, 12) comprenant un tissu extérieur (8, 13, 14a, 14b, 15, 16a, 16b) et une doublure (2, 3, 19, 20a, 20b),
dans lequel la doublure (2, 3, 19, 20a, 20b) est un tissu extensible,
un fil élastique est partiellement inséré dans le tissu extensible dans une direction de largeur de corps, et une partie d'insertion de fil élastique (4) se contracte pour former des fronces (5),
le tissu extensible est un tissu unidirectionnel qui est étirable dans la direction de largeur de corps, et dans lequel une pluralité de fils élastiques sont insérés dans le tissu extensible parallèlement les uns aux autres,
**caractérisé en ce que** chacune des fronces (5) dans la doublure (2, 3, 19, 20a, 20b) est une arête avec une largeur de 10 mm à 100 mm, et une distance entre un haut et un bas de l'arête est 10 mm à 50 mm lorsque la doublure est posée sur une surface horizontale,
le nombre des fils élastiques insérés parallèlement les uns aux autres est 2 à 25 par 1 m, et
la relation entre la doublure (2, 3, 19, 20a, 20b) et le tissu extérieur dans la direction de largeur de corps est définie de sorte qu'une longueur de la doublure (2, 3, 19, 20a, 20b) soit 1,05 à 3 fois aussi longue qu'une longueur du tissu extérieur (8, 13, 14a, 14b, 15, 16a, 16b).

2. Vêtement (1, 12)
selon la revendication 1, dans lequel les fronces (5) sont orientées dans une direction de longueur de corps.

3. Vêtement (1, 12)
selon la revendication 1 ou la revendication 2, dans lequel une masse par unité de surface du tissu extensible est 30 g/m² à 300 g/m².

4. Vêtement (1, 12)
selon l'une quelconque des revendications 1 à 3, dans lequel un taux d'allongement du tissu extensible est (A) 70 % à 600 % dans l'une d'une direction de chaîne et d'une direction de trame et (B) 5 % à 150 % dans l'autre direction, où A > B est établie.

5. Vêtement (1, 12)
selon l'une quelconque des revendications 1 à 4, dans lequel le taux d'allongement du tissu extensible dans la direction de largeur de corps est 70 % ou plus lorsqu'une largeur est 100 mm et une charge est 15 N.

6. Vêtement (1, 12)
selon l'une quelconque des revendications 1 à 5, dans lequel le tissu extensible est un tissu à poil avec un poil bouclé, et une longueur de poil est 0,1 mm à 7 mm.

7. Vêtement (1, 12)
selon l'une quelconque des revendications 1 à 6, dans lequel le tissu extérieur (8, 13, 14a, 14b, 15, 16a, 16b) est un tissu tissé composé de 30 % en poids ou plus d'au moins un type de fil continu sélectionné dans le groupe consistant en un fil multifilament polyester, un fil multifilament nylon, un fil multifilament polypropylène, et un fil multifilament polyéthylène.

8. Vêtement (1, 12)
selon l'une quelconque des revendications 1 à 7, dans lequel une masse par unité de surface du tissu extérieur (8, 13, 14a, 14b, 15, 16a, 16b) est 40 g/m² à 300 g/m².

9. Vêtement (1, 12)
selon l'une quelconque des revendications 1 à 8, dans lequel le tissu extérieur (8, 13, 14a, 14b, 15, 16a, 16b) présente une perméabilité à l'air de 0 cc/cm²·sec à 150 cc/cm²·sec, telle que mesurée par une méthode Frajour conformément à la JIS L 1096, et la perméabilité à l'air du tissu extérieur (8, 13, 14a, 14b, 15, 16a, 16b) est au moins 50 cc/cm²·sec plus basse que celle de la doublure (2, 3, 19, 20a, 20b).

10. Vêtement (1, 12)
selon l'une quelconque des revendications 1 à 9, dans lequel le vêtement (1, 12) est au moins un sélectionné dans le groupe consistant en un vêtement supérieur et un vêtement inférieur.
